# EUROPEAN PATENT SPECIFICATION

(11) **EP 3 473 669 B1**
(45) Date of publication and mention of the grant of the patent: **02.12.2020**
(21) Application number: 17197583.2
(22) Date of filing: 20.10.2017
(51) Int. Cl.: C08K 5/12, C08L 27/06

(54) **METHOD OF CONTROLLING PLASTISOL VISCOSITY**
VERFAHREN ZUR STEUERUNG DER PLASTISOLVISKOSITÄT
PROCÉDÉ DE COMMANDE DE LA VISCOSITÉ DE PLASTISOL

(43) Date of publication of application: 24.04.2019
(73) Proprietor: Eastman Chemical Company, Kingsport, TN 37660 (US)
(72) Inventor: STIMPSON, Martin James, Marlborough Wilts SN8 4EW (GB); DELOACH, Joseph Alexander, Jonesborough, Tennessee 37659 (US); HERMANS, Cornelis Johannes Gerardus Maria, Heinkenszand (NL)
(74) Representative: Ricker, Mathias

(56) References cited:
- EP-A1- 2 851 393
- TW-A- 201 704 310
- US-A1- 2007 037 926
- US-A1- 2017 145 187

## Description

### FIELD OF THE INVENTION

This invention pertains to plastisols. Specifically, the invention pertains to the use of aliphatic plasticizers to reduce viscosity and/or improve viscosity stability and plastisols comprising a fast-fusing plasticizer and a general-purpose plasticizer while maintaining acceptable plastisol fusion times. Unlike current commercial plastisol viscosity control agents such as alkyl monobenzoates, these desirable rheology and gelation properties can be gained without measurable loss of volatile and semi-volatile species in chamber emissions testing.

### BACKGROUND OF THE INVENTION

Various "specialty plasticizers" and other formulation additives have been proposed and utilized for improving plasticizer performance. Many of these additives suffer from high volatility, which is of increasing concern for air quality and workplace exposure. For example, diluents such as mineral spirits can effectively reduce the viscosity of a PVC plastisol. However, mineral spirits is a quite volatile mixture of hydrocarbons with complete evaporation occurring by 220°C, much lower than the boiling point of commercial ester plasticizers. In addition, the hydrocarbons contribute little or nothing to plasticization of PVC. Some plasticizers, such as lower phthalates and dibenzoates, have good plasticizing efficiency and can increase the rate of fusion with PVC plastisols but cause an increase in plastisol viscosity and a tendency for the plastisol viscosity to increase over time. Dibenzoate and lower phthalate plasticizers can also reduce the time for a plasticized PVC powder blend to become free-flowing, but the lower phthalates have come under scrutiny for health and toxicity concerns, leading to their regulation or ban in some jurisdictions and/or applications. Alkyl monobenzoates, for example 2-ethylhexyl benzoate, isononyl benzoate, and isodecyl benzoate, have been developed to fill these performance gaps, but these also have deficiencies. These monoesters, with 15, 16 and 17 carbons respectively, still have significant volatile content and present a risk to formulators such as flooring producers who supply into sensitive markets. These deficiencies provide an opportunity for improved products, such as those in this invention.

Traditional PVC plasticizers which are classified as "fast-fusing" or "high solvating" plasticizers include lower phthalates and dibenzoates. Examples of fast-fusing lower phthalate plasticizers include butyl benzyl phthalate, dibutyl phthalate, and diisobutyl phthalate. Examples of fast-fusing dibenzoate plasticizers include those derived from dipropylene glycol, diethylene glycol, propylene glycol, and mixtures thereof, optionally including dibenzoates of other glycols including but not limited to triethylene glycol, polyethylene glycol, and 2,2,4-trimethyl-1,3-pentanediol. The benefits of the lower phthalates and dibenzoates in speeding fusion are known and have led to considerable market volume for these products. However, they have in common a tendency to produce high viscosity plastisols whose viscosity rises over time. For this reason, in addition to their generally higher costs compared to "general purpose" plasticizers such as diisononyl phthalate (DINP) or bis(2-ethylhexyl) terephthalate (DEHT), fast-fusing plasticizers typically comprise only a portion of the total plasticizer in a PVC formulation. Data on commercially available plasticizers impact on plastisol viscosity is readily available, for example, from The Technology of Plasticizers, J. Kern Sears and Joseph R. Darby, published by John Wiley & Sons, 1982, pages 957-962.

More recently, a fast-fusing plasticizer which confers lower plastisol viscosity with less tendency for viscosity increase over time has been introduced, dibutyl terephthalate. This plasticizer, commercially available as EASTMAN EFFUSION Plasticizer, may be based on di-n-butyl terephthalate, diisobutyl terephthalate, or mixtures thereof optionally including the mixed ester n-butyl isobutyl terephthalate. Despite the lower viscosity conferred by dibutyl terephthalate, further improvements in plastisol viscosity and viscosity stability are sometimes desired. As described above, although many additives can be used for plastisol viscosity depression, these suffer from various deficiencies

The objective of this invention is to provide formulations of plasticized polyvinyl chloride (PVC) which have benefits in processing and properties. One objective is to provide plasticizers which, when formulated with polyvinyl chloride (PVC) and other plasticizers, improve the processing of PVC formulations. Another objective is to provide plasticizers which enable PVC plastisols to have low viscosities which do not increase excessively upon aging, and wherein the plasticizers do not contribute emissions of volatile organic compounds (VOC's) in the PVC formulation. These emissions include those within the "semi-volatile" or s-VOC range according to standard emission testing protocols. The other plasticizers are most typically "general purpose" plasticizers, which deliver a reasonable balance of performance and economics but may benefit from improvements that more specialized plasticizers such as the subject ones of this invention provide.

### SUMMARY OF THE INVENTION

Thus, one embodiment of our invention is a plastisol comprising polyvinyl chloride (PVC) and a plasticizer component. The plastisol comprises 30 to 100 parts plasticizer component per 100 parts PVC. The plasticizer component comprises 40 wt.% to 70 wt.% di(2-ethylhexyl)terephthalate (DEHT), 10 wt.% to 50 wt.% dibutyl terephthalate (DBT), and 5 wt.% to 50 wt.% aliphatic plasticizer.

Another embodiment of the invention is a process for making a plastisol comprising contacting polyvinyl chloride (PVC) and a plasticizer component. The plastisol comprises 30 to 100 parts plasticizer component per 100 parts PVC. The plasticizer component comprises 40 wt.% to 70 wt.% di(2-ethylhexyl)terephthalate (DEHT), 10 wt.% to 50 wt.% dibutyl terephthalate (DBT), and 5 wt.% to 50 wt.% aliphatic plasticizer.

Yet another embodiment of the invention is an article comprising a plastisol comprising polyvinyl chloride (PVC) and a plasticizer component. The plastisol comprises 30 to 100 parts plasticizer component per 100 parts PVC. The plasticizer component comprises 40 wt.% to 70 wt.% di(2-ethylhexyl)terephthalate (DEHT), 10 wt.% to 50 wt.% dibutyl terephthalate (DBT), and 5 wt.% to 50 wt.% aliphatic plasticizer.

### DETAILED DESCRIPTION

The present invention provides a plastisol comprising polyvinyl chloride (PVC) and a plasticizer component. The plastisol comprises 30 to 100 parts plasticizer component per 100 parts PVC. The plasticizer component comprises 40 wt.% to 70 wt.% di(2-ethylhexyl)terephthalate (DEHT), 10 wt.% to 50 wt.% dibutyl terephthalate (DBT), and 5 wt.% to 50 wt.% aliphatic plasticizer.

An embodiment of the invention is a plastisol comprising polyvinyl chloride (PVC) and a plasticizer component. The plastisol comprises 30 to 100 parts plasticizer component per 100 parts PVC. The plasticizer component comprises 40 wt.% to 70 wt.% di(2-ethylhexyl)terephthalate (DEHT), 10 wt.% to 50 wt.% dibutyl terephthalate (DBT), and 5 wt.% to 50 wt.% aliphatic plasticizer.

In one aspect, the plastisol comprises 30 to 80 parts plasticizer component per 100 parts PVC. Other non-limiting examples of the amount of plasticizer component included 30 to 70 parts plasticizer component per 100 parts PVC; 30 to 60 parts plasticizer component per 100 parts PVC; or 30 to 50 parts plasticizer component per 100 parts PVC.

The plasticizer component comprises 40 wt.% to 70 wt.% di(2-ethylhexyl)terephthalate (DEHT), 10 wt.% to 50 wt.% dibutyl terephthalate (DBT), and 5 wt.% to 50 wt.% aliphatic plasticizer. Other non-limiting examples of the plasticizer component composition include the plasticizer component comprises 45 wt.% to 65 wt.% DEHT, 20 wt.% to 50 wt.% DBT, and 5 to 40 wt.% aliphatic plasticizer; or the plasticizer component comprises 50 wt.% to 60 wt.% DEHT, 25 wt.% to 45 wt.% DBT, and 5 to 30 wt.% aliphatic plasticizer.

The aliphatic plasticizer is not particularly limited. Aliphatic plasticizers can be produced by the reaction of one or more aliphatic alcohols with one or more aliphatic diacids. Aliphatic plasticizers can also be produced by the reaction of one or more aliphatic diols with an aliphatic carboxylic acid.

In one aspect, the aliphatic plasticizer is the reaction product of one or more aliphatic alcohols and one or more aliphatic diacids. The aliphatic alcohols can independently be linear or branched C₄-C₁₃ alcohols. In one aspect, one of more of the aliphatic alcohols contains one or more ether groups. Non-limiting examples of aliphatic alcohols include n-butyl, isobutyl, 2-butyl, n-hexyl, isohexyl, 2-ethylbutyl, n-heptyl, isoheptyl, butoxyethyl, octyl, isooctyl, 2-ethylhexyl, n-nonyl, isononyl, n-decyl, and isodecyl. In one aspect, the one or more aliphatic alcohols is selected from the group consisting of n-butyl, isobutyl, 2-butyl, 2-ethylhexyl, butoxyethyl, n-octyl, isooctyl, isononyl, n-decyl, and isodecyl alcohols. The aliphatic acids can independently be linear or branched. Non-limiting examples of aliphatic acids include adipic, succinic, glutaric, azelaic, and sebacic acids. In one aspect, the one or more aliphatic acids is selected from the group consisting of adipic, succinic, and azelaic acids.

In one aspect, the aliphatic plasticizer is selected from the group consisting of di-2-ethylhexyl adipate (DOA), dibutoxyethyl adipate, diisononyl adipate (DINA), heptyl nonyl adipate (C₇-C₉ adipate), and diisodecyl adipate (DIDA). In one aspect, the plasticizer is di-2-ethylhexyl adipate (DOA). In one aspect, the plasticizer is selected from the group consisting of diisononyl adipate (DINA), heptyl nonyl adipate (C₇-C₉ adipate), and diisodecyl adipate (DIDA).

In one aspect, the aliphatic plasticizer is the reaction product of one or more aliphatic diols and an aliphatic carboxylic acid. Non-limiting examples of aliphatic diols include diethylene glycol, triethylene glycol, tetraethylene glycol, or higher oligomers collectively termed polyethylene glycols. In one aspect, the one or more aliphatic diols is selected from the group consisting of triethylene glycol and tetraethylene glycol. In one aspect, the aliphatic carboxylic acid may be linear or branched C₄-C₁₀ carboxylic acid. Non-limiting examples of aliphatic carboxylic acids include butanoic, hexanoic, 2-ethylbutanoic, octanoic, isooctanoic, 2-ethylhexanoic, nonanoic, and decanoic acids. In one aspect, the aliphatic carboxylic acid is selected from the group consisting of 2-ethylbutanoic and 2-ethylhexanoic acids.

In one aspect, the aliphatic plasticizer is selected from the group consisting of triethylene glycol di-2-ethylhexanoate (TEG-EH), triethylene glycol di-2-ethylbutyrate (TEG-EB), triethylene glycol dicaprylate, and polyethylene glycol di-2-ethylhexanoate (PEG-EH). In one aspect, the aliphatic plasticizer is triethylene glycol di-2-ethylhexanoate (TEG-EH).

We have surprisingly found that incorporating an aliphatic plasticizer into a PVC plastisol comprising di(2-ethylhexyl)terephthalate (DEHT) and dibutyl terephthalate (DBT) has a positive impact on plastisol viscosity while still maintaining significantly improved fusion times. For example, the fusion time of a plastisol comprising PVC and a plasticizer component comprising DEHT, DBT, and an aliphatic plasticizer can be compared to a benchmark. The benchmark consists of the plastisol with the proviso that the aliphatic plasticizer is replaced with DBT. A non-limiting illustration of a plastisol and the corresponding benchmark are as follows. A plastisol made up of 100 parts PVC and 60 parts plasticizer component with the plasticizer component being made up of 40 parts DEHT, 15 parts DBT, and 5 parts aliphatic plasticizer has a corresponding benchmark of 100 parts PVC and 60 parts plasticizer component with the plasticizer component being made up of 40 parts DEHT, 20 parts DBT. The 5 parts aliphatic plasticizer in the plastisol is simply replaced with 5 parts DBT in the benchmark.

In one aspect, a ratio of a plastisol fusion time to a benchmark fusion time [fusion(plastisol):fusion(benchmark)] is less than 2.0. The plastisol fusion time and the benchmark fusion time are measured according to ASTM Method D2538. Other non-limiting examples of the ratio are less than 1.8, less than 1.6, less than 1.4, or less than 1.2.

In one aspect, the plasticizer component further comprises at least one additional plasticizer. The at least one additional plasticizer is not particularly limited. In one aspect, the at least one additional plasticizer comprises phthalates, terephthalates; isophthalates; trimellitates; adipates; cyclohexanedicarboxylates; benzoates; phosphates; diesters of ethylene glycol, propylene glycol, their oligomers, and mixtures thereof; citrates; succinates; alkyl sulfonates; fatty acid esters and epoxidized fatty acid esters; triglycerides and epoxidized triglycerides, optionally substituted; dianhydrohexitol diesters; pentaerythritol-based tetraesters; furan-based esters; other esters; ketals; and/or polymeric plasticizers. In another aspect, the at least one additional plasticizer comprises diisooctyl phthalate, di-2-ethylhexyl phthalate, tri-2-ethylhexyl trimellitate, di-2-propylheptyl phthalate, diisodecyl phthalate, diisoundecyl phthalate, ditridecyl phthalate, butyl 2-ethylhexyl terephthalate, trioctyl trimellitate, triisononyl trimellitate, 2,2,4-trimethyl-1,3-pentanediol diisobutyrate, isononyl benzoate, isodecyl benzoate, diisononyl 1,2-cyclohexanedicarboxylate, , diethylene glycol dibenzoate, dipropylene glycol dibenzoate, triethylene glycol dibenzoate, propylene glycol dibenzoate, and/or dibenzoates produced from mixtures of diethylene glycol and dipropylene glycol.

In one aspect, the plasticizer component comprises an additional plasticizer in an amount ranging from 10 wt.% to 40 wt.% based on total plasticizer component; or 15 wt.% to 30 wt.% based on total plasticizers component.

In one aspect, the plastisol comprises 10 to 300 parts other components per 100 parts resin. In other non-limiting examples, the plastisol comprises 10 to 150 parts other components per 100 parts resin; or 25 to 125 parts other components per 100 parts resin. The other components may comprise fillers, pigments, stabilizers, foaming agents, hollow materials, elastomeric materials, rheology control additives, and/or adhesion promoters.

In one aspect, the plastisol comprises fillers. Non-limiting examples of fillers include calcium carbonate, magnesium carbonate, silica, clay, mica, graphite, zinc oxide, fly ash, and/or calcium oxide. In one aspect, the fillers comprise calcium carbonate.

The plastisol, in one aspect, comprises stabilizers. Non-limiting examples of stabilizers include metal soaps, epoxidized oils and epoxidized fatty acid esters, and/or organotin compounds.

In one aspect, the plastisol can be formulated or produced in a manner which incorporates more free volume into the fused plastisol. In one such technique, mechanical frothing may be applied to produce a foamed plastisol. In another aspect, a chemical foaming agent which results in a foamed structure after fusing is completed. One non-limiting example of such a foaming agent is azodicarbonamide. In one aspect, a catalyst is used along with the chemical foaming agent. In another aspect, foam stabilizers are used. In another aspect, hollow materials are incorporated into the plastisol. Non-limiting examples of hollow materials include glass beads, microbeads, and/or microspheres, which can be produced from either inorganic or polymeric organic substances. In one aspect, the hollow materials are thermoplastic microspheres.

In one aspect, the plastisol comprises elastomeric materials. Non-limiting examples of elastomeric materials include nitrile-butadiene rubber, natural rubber, isoprene rubber, butadiene rubber, styrene-butadiene rubber, butyl rubber, ethylenepropylene-diene monomer (EPDM) rubber, chloroprene rubber, styrenated block copolymers, ethylene-vinyl acetate copolymers, olefinic elastomers, olefinic copolymer elastomers, silicone elastomers, polysulfide elastomers, and/or polyurethane elastomers.

In another aspect, additives to control rheology can be incorporated into the plastisols. These may include secondary plasticizers or diluents. Examples of such additives include petroleum distillates; hydrocarbon oils such as, for example, mineral oil and mineral spirits; fatty acid esters; polyphenyl oligomers, optionally partially hydrogenated; and organic solvents. Conversely, thickeners may be added to boost viscosity as desired. Materials and techniques for adjusting plastisol rheology are well known in the art.

In one aspect, the plastisol comprises adhesion promoters. Non-limiting examples of adhesion promoters include polyamidoamines, blocked isocyanates and isocyanurates, silanes, and/or epoxy resins.

The plastisol can be formed into a fused sheet. One aspect includes the plastisol, whereby a fused sheet consisting of the plastisol has a total semi-volatile organic compound emissions (TSVOC) of less than 0.1 mg/m³ using toluene equivalents after 28 days using the AgBB methodologies. Other non-limiting examples of emission amounts after 28 days include TSVOC of less than 0.05 mg/m³, and less than 0.01 mg/m³. The fused sheet consists of the plastisol when no other ingredients have been added to impact plastisol properties such as viscosity. The fused sheet consists of the plastisol is not intended to exclude normal processing aids used in the production of a fused sheet from a plastisol. Emissions values are based on testing according to the German AgBB (Committee for Health-Related Evaluation of Building Products) methodology, February 2015 regulations.

Another embodiment of the invention is a process for making a plastisol comprising contacting polyvinyl chloride (PVC) and a plasticizer component. The plastisol comprises 30 to 100 parts plasticizer component per 100 parts PVC. The plasticizer component comprises 40 wt.% to 70 wt.% di(2-ethylhexyl)terephthalate (DEHT), 10 wt.% to 50 wt.% dibutyl terephthalate (DBT), and 5 wt.% to 50 wt.% aliphatic plasticizer.

The various aspects of the plastisol, including the amount of the plasticizer component, the plasticizer component's weight percentages of DEHT, DBT, and aliphatic plasticizer, the aliphatic plasticizer being the reaction product one or more aliphatic alcohols and one or more aliphatic diacids, the aliphatic alcohols, the aliphatic diacids, and the named aliphatic plasticizers; the aliphatic plasticizer being the reaction product one or more aliphatic diols and an aliphatic carboxylic acid, the aliphatic diols, the aliphatic carboxylic acids, and the name aliphatic plasticizers; and the relative fusion times described above apply to this embodiment as well.

For example, in one aspect the plastisol comprises 30 to 80 parts plasticizer component and the plasticizer component comprises 45 wt.% to 65 wt.% DEHT, 20 wt.% to 50 wt.% DBT, and 5 to 40 wt.% aliphatic plasticizer.

In one aspect, the aliphatic plasticizer is a reaction product of one or more aliphatic alcohols and one or more aliphatic diacids. The one or more aliphatic alcohols are independently linear or branched C₄-C₁₃ alcohols. In one aspect, one or more of the aliphatic alcohols contain one or more ether groups. The one or more aliphatic diacids is selected from the group consisting of adipic, succinic, glutaric, azelaic, and sebacic acids. In one aspect, the aliphatic plasticizer is selected from the group consisting of di-2-ethylhexyl adipate (DOA), dibutoxyethyl adipate, diisononyl adipate (DINA), heptyl nonyl adipate(C₇-C₉ adipate), and diisodecyl adipate (DIDA).

In one aspect, the aliphatic plasticizer is the reaction product of one or more aliphatic diols and an aliphatic carboxylic acid. Non-limiting examples of aliphatic diols include diethylene glycol, triethylene glycol, tetraethylene glycol, or higher oligomers collectively termed polyethylene glycols. In one aspect, the one or more aliphatic diols is selected from the group consisting of triethylene glycol and tetraethylene glycol. In one aspect, the aliphatic carboxylic acid may be linear or branched C₄-C₁₀ carboxylic acid. In one aspect, the aliphatic plasticizer is selected from the group consisting of triethylene glycol di-2-ethylhexanoate (TEG-EH), triethylene glycol di-2-ethylbutyrate (TEG-EB), triethylene glycol dicaprylate, and polyethylene glycol di-2-ethylhexanoate (PEG-EH). In one aspect, the aliphatic plasticizer is triethylene glycol di-2-ethylhexanoate (TEG-EH).

Yet another embodiment of the invention is an article comprising a plastisol comprising polyvinyl chloride (PVC) and a plasticizer component. The plastisol comprises 30 to 100 parts plasticizer component per 100 parts PVC. The plasticizer component comprises 40 wt.% to 70 wt.% di(2-ethylhexyl)terephthalate (DEHT), 10 wt.% to 50 wt.% dibutyl terephthalate (DBT), and 5 wt.% to 50 wt.% aliphatic plasticizer.

The various aspects of the plastisol, including the amount of the plasticizer component, the plasticizer component's weight percentages of DEHT, DBT, and aliphatic plasticizer, the aliphatic plasticizer being the reaction product one or more aliphatic alcohols and one or more aliphatic diacids, the aliphatic alcohols, the aliphatic diacids, and the named aliphatic plasticizers; the aliphatic plasticizer being the reaction product one or more aliphatic diols and an aliphatic carboxylic acid, the aliphatic diols, the aliphatic carboxylic acids, and the name aliphatic plasticizers; and the relative fusion times described above apply to this embodiment as well.

In one aspect, the aliphatic plasticizer is a reaction product of one or more aliphatic alcohols and one or more aliphatic diacids. The one or more aliphatic alcohols are independently linear or branched C₄-C₁₃ alcohols. In one aspect, one or more of the aliphatic alcohols contain one or more ether groups. The one or more aliphatic diacids is selected from the group consisting of adipic, succinic, glutaric, azelaic, and sebacic acids. In one aspect, the aliphatic plasticizer is selected from the group consisting of di-2-ethylhexyl adipate (DOA), dibutoxyethyl adipate, diisononyl adipate (DINA), heptyl nonyl adipate(C₇-C₉ adipate), and diisodecyl adipate (DIDA).

In one aspect, the aliphatic plasticizer is the reaction product of one or more aliphatic diols and an aliphatic carboxylic acid. Non-limiting examples of aliphatic diols include diethylene glycol, triethylene glycol, tetraethylene glycol, or higher oligomers collectively termed polyethylene glycols. In one aspect, the one or more aliphatic diols is selected from the group consisting of triethylene glycol and tetraethylene glycol. In one aspect, the aliphatic carboxylic acid may be linear or branched C₄-C₁₀ carboxylic acid. In one aspect, the aliphatic plasticizer is selected from the group consisting of triethylene glycol di-2-ethylhexanoate (TEG-EH), triethylene glycol di-2-ethylbutyrate (TEG-EB), triethylene glycol dicaprylate, and polyethylene glycol di-2-ethylhexanoate (PEG-EH). In one aspect, the aliphatic plasticizer is triethylene glycol di-2-ethylhexanoate (TEG-EH).

In one aspect, the article is selected from the group consisting of floor coverings, tiles, fabrics, wall coverings, mats, coatings, sealants, adhesives, sheets, toys, screens, window shades, films, upholstery, gloves, footwear, foam, inks, tool handles, and traffic cones. In one aspect, the article is selected from the group consisting of floor coverings, tiles, fabrics, wall coverings, and mats. In one aspect, the article is selected from the group consisting of floor coverings and tiles.

Listed below are non-limiting embodiments A1-A17.
A1. A plastisol comprising
   polyvinyl chloride (PVC) and a plasticizer component;
   wherein the plastisol comprises 30 to 100 parts plasticizer component per 100 parts PVC, and
   wherein the plasticizer component comprises 40 wt.% to 70 wt.% di(2-ethylhexyl)terephthalate (DEHT), 10 wt.% to 50 wt.% dibutyl terephthalate (DBT), and 5 wt.% to 50 wt.% aliphatic plasticizer.
A2. The plastisol of embodiment A1, wherein the plastisol comprises 30 to 80 parts plasticizer component per 100 parts PVC; 30 to 70 parts plasticizer component per 100 parts PVC; 30 to 60 parts plasticizer component per 100 parts PVC; or 30 to 50 parts plasticizer component per 100 parts PVC.
A3. The plastisol of any of embodiments A1-A2, wherein the plasticizer component comprises 45 wt.% to 65 wt.% DEHT, 20 wt.% to 50 wt.% DBT, and 5 to 40 wt.% aliphatic plasticizer; or wherein the plasticizer component comprises 50 wt.% to 60 wt.% DEHT, 25 wt.% to 45 wt.% DBT, and 5 to 30 wt.% aliphatic plasticizer.
A4. The plastisol of any of embodiments A1-A3, wherein the aliphatic plasticizer is the reaction product of one or more aliphatic alcohols and one or more aliphatic diacids,
   wherein the one or more aliphatic alcohols is independently linear or branched C₄-C₁₃ alcohols, optionally containing one or more ether groups, and
   wherein the one or more aliphatic diacids is selected from the group consisting of adipic, succinic, glutaric, azelaic, and sebacic acids; or
   wherein the one or more aliphatic alcohols is selected from the group consisting of n-butyl, isobutyl, 2-butyl, n-hexyl, isohexyl, 2-ethylbutyl, n-heptyl, isoheptyl, butoxyethyl, n-octyl, isooctyl, 2-ethylhexyl, n-nonyl, isononyl, n-decyl, and isodecyl alcohols, and
   wherein the one or more aliphatic diacids is selected from the group consisting of adipic, succinic, glutaric, azelaic, and sebacic acids; or
   wherein the one or more aliphatic alcohols is selected from the group consisting of n-butyl, isobutyl, 2-butyl, butoxyethyl, 2-ethylhexyl, n-octyl, isooctyl, isononyl, n-decyl, and isodecyl, and
   wherein the one or more aliphatic diacids are selected from the group consisting of adipic, succinic, and azelaic acids.
A5. The plastisol of any of embodiments A1-A4, wherein the aliphatic plasticizer is selected from the group consisting of di-2-ethylhexyl adipate (DOA), dibutoxyethyl adipate, diisononyl adipate (DINA), heptyl nonyl adipate (C₇-C₉ adipate, and diisodecyl adipate (DIDA); or
   wherein the aliphatic plasticizer is di-2-ethylhexyl adipate (DOA).
A6. The plastisol of any of embodiments A1-A3, wherein the aliphatic plasticizer is the reaction product of one or more aliphatic diols and an aliphatic carboxylic acid
   wherein the one or more aliphatic diol is selected from the group consisting of ethylene glycol, diethylene glycol, triethylene glycol, tetraethylene glycol, or higher oligomers collectively termed polyethylene glycols, and
   wherein the aliphatic carboxylic acid may be linear or branched C₄-C₁₀ carboxylic acid; or
   wherein the one or more aliphatic diol is selected from the group consisting of ethylene glycol, diethylene glycol, triethylene glycol, tetraethylene glycol, or higher oligomers collectively termed polyethylene glycols, and
   wherein the aliphatic carboxylic acid is selected from the group consisting of butanoic, hexanoic, 2-ethylbutanoic, octanoic, isooctanoic, 2-ethylhexanoic, nonanoic, and decanoic acids; or
   wherein the one or more aliphatic diols is selected from the group consisting of triethylene glycol and tetraethylene glycol, and
   wherein the aliphatic carboxylic acid is selected from the group consisting of 2-ethylbutanoic and 2-ethylhexanoic acids.
A7. The plastisol of any of embodiments A1-A3 and A6, wherein the aliphatic plasticizer is selected from the group consisting of triethylene glycol di-2-ethylhexanoate (TEG-EH), triethylene glycol di-2-ethylbutyrate (TEG-EB), triethylene glycol dicaprylate, and polyethylene glycol di-2-ethylhexanoate (PEG-EH); or
   wherein the aliphatic plasticizer is triethylene glycol di-2-ethylhexanoate (TEG-EH).
A8. The plastisol of any of embodiments A1-A7, wherein the plasticizer component comprises an additional plasticizer in an amount ranging from 10 wt.% to 40 wt.% based on total plasticizer component; or 15 wt.% to 30 wt.% based on total plasticizers component.
A9. The plastisol of any of embodiments A1-A8, wherein a ratio of a plastisol fusion time to a benchmark fusion time [fusion(plastisol):fusion(benchmark)] is less than 2.0, wherein the benchmark consists of the plastisol with the proviso that the aliphatic plasticizer is replaced by DBT, and wherein the plastisol fusion time and the benchmark fusion time are measured according to ASTM Method D2538; or wherein the ratio of the plastisol fusion time is less than 1.8, less than 1.6, less than 1.4, or less than 1.2.
A10. The plastisol of any of embodiments A1-A9, wherein the plastisol comprises 10 to 300 parts other components per 100 parts PVC; or wherein the plastisol comprises 10 to 150 parts other components per 100 parts PVC; or wherein the plastisol comprises 25 to 125 parts other components per 100 parts PVC; and wherein the other components comprise fillers, pigments, stabilizers, foaming agents, hollow materials, elastomeric materials, rheology control additives, and/or adhesion promoters
A11. The plastisol of embodiment A10, wherein the fillers comprise calcium carbonate, magnesium carbonate, silica, clay, mica, graphite, zinc oxide, fly ash, and/or calcium oxide; or the fillers comprise calcium carbonate
A12. The plastisol of any of embodiments A10-A11, wherein the stabilizers comprise metal soaps, epoxidized oils and epoxidized fatty acid esters, and/or organotin compounds
A13. The plastisol of any of embodiments A10-A12, wherein the foaming agents comprise azodicarbonamide.
A14. The plastisol of any of embodiments A10-A13, wherein the hollow materials comprise inorganic or organic glass beads, microbeads, and/or microspheres
A15. The plastisol of any of embodiments A10-A14, wherein the elastomeric materials comprise nitrile-butadiene rubber, natural rubber, isoprene rubber, butadiene rubber, styrene-butadiene rubber, butyl rubber, ethylenepropylene-diene monomer (EPDM) rubber, chloroprene rubber, styrenated block copolymers, ethylene-vinyl acetate copolymers, olefinic elastomers, olefinic copolymer elastomers, silicone elastomers, polysulfide elastomers, and/or polyurethane elastomers
A16. The plastisol of any of embodiments A10-A15, wherein the adhesion promoters comprise polyamidoamines, blocked isocyanates and isocyanurates, silanes, or epoxy resins.
A17. The plastisol of any of embodiments A1-A16, whereby a fused sheet consisting of the plastisol has a total semi-volatile organic compound (TSVOC) of less than 0.01 mg/m³ using toluene equivalents of emissions after 28 days as evaluated using the AgBB methodologies.

Listed below is non-limiting embodiment B1.
B1. A process for making any of the plastisols of embodiment A1-A17 comprising contacting the polyvinyl chloride (PVC) and the plasticizer component.

Listed below are non-limiting embodiments C1-C2.
C1. An article comprising any of the plastisols of embodiments A1-A17. comprising contacting polyvinyl chloride (PVC) and a plasticizer component.
C2. The article of embodiment C1, wherein the article is selected from the group consisting of floor coverings, tiles, fabrics, wall coverings, mats, coatings, sealants, adhesives, sheets, toys, screens, window shades, films, upholstery, gloves, footwear, foam, inks, tool handles, and traffic cones; or wherein the article is selected from the group consisting of floor coverings, tiles, fabrics. wall coverings, and mats.

### EXAMPLES

In addition to the plasticizers described as Ex 1-10, Comp Ex C1-C9 and commercially available viscosity additives VA1-VA6, the ingredients described in Table 1 were used in the formulations and test results described below. The term "phr" refers to the addition level in weight of the ingredient per 100 parts weight of the PVC resin. Each ingredient was obtained from the commercial sources and was used without further purification.

**Table 1: Ingredients and additives used in PVC formulations**

| Material | Description | Supplier |
|---|---|---|
| Geon 121A | PVC paste resin, K-74 | Mexichem S.A.B. de C.V. |
| EASTMAN 168 Non-Phthalate Plasticizer | Bis(2-ethylhexyl) terephthalate | Eastman Chemical Company |
| EASTMAN EFFUSION | Dibutyl terephthalate | Eastman Chemical Company |
| BENZOFLEX 2088 | Blend of diethylene, triethylene, and dipropylene glycol dibenzoates | Eastman Chemical Company |
| DAPREX 6.8 | Epoxidized soybean oil | Galata Chemicals |
| AKROSTAB LT-4798 | Barium/zinc stabilizer | Akcros Chemicals Inc. |

### General Procedure for the Preparation of PVC Plastisols

A FlackTek SPEEDMIXER model 600 FVZ was used to prepare PVC plastisols. The liquid additives were charged into a mixing cup and premixed until homogeneous. Then, the PVC resin was added, stirred to distribute with the liquid additives, and the cup was placed into the mixer. The contents were shaken in the mixer for 30 seconds at 1200 rpm and the side of the container was scraped, then the contents were shaken in the mixer for 40 seconds at 1600 rpm and the side of the container was scraped again. This process was repeated if necessary to insure complete dispersion. The resulting plastisol was then deaerated in a desiccator to which vacuum was applied for 20 minutes.

### EVALUATION OF PLASTISOLS

### Brookfield Viscosities

Brookfield viscosities were determined using a Brookfield DV-1 digital viscometer, in accordance with ASTM Method D1824, "Standard Test Method for Apparent Viscosity of Plastisols and Organosols at Low Shear Rates." Spindle speeds of 2 rpm and 20 rpm were used in the evaluations.

### Severs Viscosities

Severs viscosities were determined using a Burrell-Severs Model A120 Rheometer, in accordance with ASTM Method D1823, "Standard Test Method for Apparent Viscosity of Plastisols and Organosols at High Shear Rates by Extrusion Viscometer." Nitrogen pressures of 40 psi and 80 psi were used in the evaluations. Fusion Determination

Fusion data were generated using a Brabender INTELLI-TORQUE PLASTI-CORDER rheometer, in accordance with ASTM Method D2538, "Standard Practice for Fusion of Poly(Vinyl Chloride) (PVC) Compounds Using a Torque Rheometer." Fusion times are reported as the time at which the peak mixer torque is recorded.

### Comparative Example C1 -

The general procedure for the preparation of PVC plastisols was followed using 100 phr Geon 121A PVC, 3 phr Epoxidized soybean oil, 3 phr AKROSTAB LT-4798, and 44 phr EASTMAN168 plasticizer (DEHT). Brookfield viscosities, Severs viscosities, and fusion times were determined by the procedures noted above and the results are given in Tables 2, 3, and 4, respectively. Brookfield and Severs viscosities were determined the day that the plastisols were produced (Initial), and on the first, third, and seventh days after they were produced.

### Comparative Examples C2-C8 and Examples 1-6

Comparative Example C1 was repeated using 24 phr DEHT and 20 phr of the plasticizer(s) as given in Table 2. Brookfield viscosities, Severs viscosities, and fusion times were determined by the procedures noted above and the results are given in Table 2, 3, and 4, respectively. Brookfield and Severs viscosities were determined the day that the plastisols were produced (Initial), and on the first, third, seventh, and/or twenty-eighth day after they were produced. If a measurement was not taken for a sample on a particular day, the table indicates not measured (NM). Where plastisols of the same composition were made in different batches, they are indicated with the same example number with different letters (e.g., Example 1a and 1b are plastisols made with the same composition).

**Table 2 - Plastisol Brookfield viscosity - Comparative Examples C1-C8 and Examples 1-6**

| Example | plasticizer | Rpm | Initial | Day 1 | Day 3 | Day 7 | Day 28 |
|---|---|---|---|---|---|---|---|
| C1 | 20 DEHT | 2 | 29000 | 29000 | 30600 | 34000 | NM |
| C2 | 20 DBT | 2 | 40000 | 44500 | 47600 | 51400 | NM |
| C3 | 20 DOA | 2 | 15200 | 17600 | 17000 | 18800 | NM |
| C4 | 20 TEG-EH | 2 | 18200 | 22800 | 24700 | 22100 | NM |
| C5 | 20 MB10 | 2 | 15200 | 15600 | 16200 | 17500 | NM |
| 1a | 17.5 DBT / 2.5 DOA | 2 | 42600 | 43900 | NM | 52500 | 58000 |
| 1b | | 2 | 36600 | 40400 | 48400 | 48400 | 60400 |
| 2a | 15 DBT / 5 DOA | 2 | 32800 | 40500 | 42400 | 45500 | NM |
| 2b | | 2 | 32000 | 36000 | NM | 48500 | 50000 |
| 2c | | 2 | 31500 | 32600 | 33100 | 38600 | 49900 |
| 2d | | 2 | 30200 | 34500 | 45700 | 43600 | 55100 |
| 3a | 12.5 DBT /7.5 DOA | 2 | 32300 | 36900 | NM | 45000 | 47400 |
| 3b | | 2 | 27700 | 29200 | 29700 | 32600 | 36800 |
| 3c | | 2 | 26400 | 29500 | 35000 | 34300 | 44200 |
| 4 | 17.5 DBT / 2.5 TEG-EH | 2 | 41200 | 42800 | NM | 52800 | 60500 |
| 5a | 15 DBT/5 TEG-EH | 2 | 40600 | 43700 | NM | 45500 | 52000 |
| 5b | | 2 | 34200 | 34900 | 39000 | 44200 | 59100 |
| 6a | 12.5 DBT / 7.5 TEG-EH | 2 | 35100 | 35400 | NM | 37500 | 42500 |
| 6b | | 2 | 26300 | 30600 | 29200 | 35700 | 37700 |
| C6 | 17.5 DBT / 2.5 MB10 | 2 | 34000 | 38700 | 39300 | 47500 | 59200 |
| C7a | 15 DBT / 5 MB10 | 2 | 34400 | 38000 | NM | 47000 | 56500 |
| C7b | | 2 | 30400 | 33000 | 35000 | 38200 | 46000 |
| C7c | | 2 | 35500 | 35700 | 36100 | 48600 | 56300 |
| C8a | 12.5 DBT / 7.5 MB10 | 2 | 26600 | 29400 | 35100 | 34300 | 40600 |
| C8b | | 2 | 26200 | 28000 | 38000 | 33800 | 41500 |
| C1 | 20 DEHT | 20 | 23200 | 27000 | 28800 | 29600 | NM |
| C2 | 20 DBT | 20 | 20800 | 22100 | 23400 | 26000 | NM |
| C3 | 20 DOA | 20 | 8100 | 9300 | 9800 | 10300 | NM |
| C4 | 20 TEG-EH | 20 | 12250 | 13400 | 14000 | 14000 | NM |
| C5 | 20 MB10 | 20 | 8500 | 9850 | 10650 | 10650 | NM |
| 1a | 17.5 DBT / 2.5 DOA | 20 | 16700 | 19650 | NM | 22950 | 27550 |
| 1b | | 20 | 17750 | 19400 | 20500 | 23500 | 26650 |
| 2a | 15 DBT / 5 DOA | 20 | 14550 | 16750 | 18600 | 19550 | NM |
| 2b | | 20 | 14040 | 15700 | NM | 18300 | 23350 |
| 2c | | 20 | 14400 | 15050 | 18300 | 18650 | 21000 |
| 2d | | 20 | 15900 | 18100 | 18550 | 21800 | 26500 |
| 3a | 12.5 DBT /7.5 DOA | 20 | 14550 | 15200 | NM | 17200 | 19450 |
| 3b | | 20 | 11900 | 12900 | 14750 | 14500 | 16500 |
| 3c | | 20 | 14250 | 15450 | 16200 | 18550 | 21750 |
| 4 | 17.5 DBT / 2.5 TEG-EH | 20 | 19650 | 22050 | NM | 25500 | 28100 |
| 5a | 15 DBT/5 TEG-EH | 20 | 16560 | 17800 | NM | 20850 | 23950 |
| 5b | | 20 | 15700 | 17300 | 19350 | 19900 | 24200 |
| 6a | 12.5 DBT / 7.5 TEG-EH | 20 | 15300 | 16150 | NM | 17850 | 19750 |
| 6b | | 20 | 13700 | 14800 | 16900 | 16900 | 19200 |
| C6 | 17.5 DBT / 2.5 MB10 | 20 | 15750 | 17450 | 20850 | 20600 | 23800 |
| C7a | 15 DBT/5 MB10 | 20 | 18360 | 19000 | NM | 24000 | 26500 |
| C7b | | 20 | 15250 | 17050 | 17750 | 20000 | 24000 |
| C7c | | 20 | 17000 | 16950 | 19750 | 20050 | 23500 |
| C8a | 12.5 DBT / 7.5 MB10 | 20 | 14000 | 15150 | 15550 | 18050 | 21800 |
| C8b | | 20 | 14550 | 15800 | 16200 | 19000 | 22000 |

| | | | | | | | |
|---|---|---|---|---|---|---|---|
| *Exs 2d, 3c, 5b, and 6b and C7c and C8b were measured at day 29 instead of 28* | | | | | | | |

**Table 3 - Plastisol Severs viscosity - Comparative Examples C1-C8 and Examples 1-6**

| Example | plasticizer | psi | Initial | Day 1 | Day 3 | Day 7 | Day 28 |
|---|---|---|---|---|---|---|---|
| C1 | 20 DEHT | 40 | NM | 1267263 | 1249792 | 1344908 | NM |
| C2 | 20 DBT | 40 | NM | 193868 | 220093 | 256208 | NM |
| C3 | 20 DOA | 40 | NM | 139483 | 142062 | 140974 | NM |
| C4 | 20 TEG-EH | 40 | NM | 344994 | 308841 | 277615 | NM |
| C5 | 20 MB10 | 40 | NM | 211763 | 192338 | 193623 | NM |
| 1a | 17.5 DBT / 2.5 DOA | 40 | 118036 | 127139 | NM | 145377 | NM |
| 1b | | 40 | 148887 | 148881 | 152144 | 156197 | 170758 |
| 2a | 15 DBT / 5 DOA | 40 | NM | 175989 | 181356 | 193749 | NM |
| 2b | | 40 | 143373 | 156904 | NM | 158298 | NM |
| 2c | | 40 | 151102 | 156679 | 158359 | 160379 | 173001 |
| 2d | | 40 | 149705 | 153962 | 161023 | 159966 | 166917 |
| 3a | 12.5 DBT /7.5 DOA | 40 | 122342 | 122232 | NM | 120704 | NM |
| 3b | | 40 | 138577 | 134988 | 135441 | 137012 | 140935 |
| 3c | | 40 | 131761 | 148702 | 135810 | 139272 | 142661 |
| 4 | 17.5 DBT / 2.5 TEG-EH | 40 | 154293 | 160569 | NM | 155249 | NM |
| 5a | 15 DBT/5 TEG-EH | 40 | 160984 | 167615 | NM | 172898 | NM |
| 5b | | 40 | 184104 | 190284 | 190534 | 199359 | 196891 |
| 6a | 12.5 DBT / 7.5 TEG-EH | 40 | 158881 | 156679 | NM | 158722 | NM |
| 6b | | 40 | 166949 | 163506 | 171278 | 182351 | 182751 |
| C6 | 17.5 DBT / 2.5 MB10 | 40 | 157311 | 174716 | 167966 | 167029 | 179150 |
| C7a | 15 DBT/5 MB10 | 40 | 164364 | 179148 | NM | 169840 | NM |
| C7b | | 40 | 151901 | 166975 | 171439 | 169537 | 173434 |
| C7c | | 40 | 158449 | 185382 | 166343 | 173361 | 175444 |
| C8a | 12.5 DBT / 7.5 MB10 | 40 | 142558 | 151921 | 164016 | 152528 | 158912 |
| C8b | | 40 | 153835 | 156246 | 155739 | 156148 | 165599 |
| C1 | 20 168 | 80 | NM | 2159946 | 2083422 | 1747599 | NM |
| C2 | 20 DBT | 80 | NM | 344960 | 374163 | 398743 | NM |
| C3 | 20 DOA | 80 | NM | 242453 | 241097 | 236942 | NM |
| C4 | 20 TEG-EH | 80 | NM | 541423 | 489224 | 477265 | NM |
| C5 | 20 MB10 | 80 | NM | 362138 | 326856 | 323315 | NM |
| 1a | 17.5 DBT / 2.5 DOA | 80 | 206244 | 217849 | NM | 252868 | NM |
| 1b | | 80 | 252618 | 257573 | 260319 | 267896 | 294719 |
| 2a | 15 DBT / 5 DOA | 80 | NM | 318880 | 316868 | 329461 | NM |
| 2b | | 80 | 256727 | 266660 | NM | 272587 | NM |
| 2c | | 80 | 262501 | 267748 | 270409 | 275394 | 300277 |
| 2d | | 80 | 247952 | 256901 | 267409 | 269600 | 274345 |
| 3a | 12.5 DBT /7.5 DOA | 80 | 214465 | 207951 | NM | 211115 | NM |
| 3b | | 80 | 226768 | 236043 | 232026 | 232107 | 241483 |
| 3c | | 80 | 227738 | 242677 | 226730 | 234462 | 240295 |
| 4 | 17.5 DBT / 2.5 TEG-EH | 80 | 265117 | 279849 | NM | 275066 | NM |
| 5a | 15 DBT/5 TEG-EH | 80 | 277160 | 280051 | NM | 295630 | NM |
| 5b | | 80 | 321073 | 317389 | 321032 | 332364 | 330664 |
| 6a | 12.5 DBT / 7.5 TEG-EH | 80 | 273474 | 274473 | NM | 275235 | NM |
| 6b | | 80 | 286492 | 288461 | 295336 | 296099 | 305233 |
| C6 | 17.5 DBT / 2.5 MB10 | 80 | 262565 | 288354 | 282211 | 286690 | 316341 |
| C7a | 15 DBT/5 MB10 | 80 | 271462 | 283455 | NM | 291088 | NM |
| C7b | | 80 | 253292 | 276875 | 288890 | 291353 | 297182 |
| C7c | | 80 | 281804 | 290372 | 280558 | 290889 | 297260 |
| C8a | 12.5 DBT / 7.5 MB10 | 80 | 247902 | 262699 | 265989 | 263142 | 268167 |
| C8b | | 80 | 258645 | 269606 | 259630 | 261780 | 277740 |

| | | | | | | | |
|---|---|---|---|---|---|---|---|
| *Exs 11-14 was measured at* 29 *days instead of 28* | | | | | | | |

Adding any of the plasticizers, EASTMAN EFFUSION plasticizer (DBT), EASTMAN DOA plasticizer (DOA), EASTMAN TEG-EH. Viscosity additive (TEG-EH) or JAYFLEX MB10 (MB10), to a plastisol, replacing 20 phr of EASTMAN 168 plasticizer, reduced the high shear viscosity by nearly an order of magnitude at both the 40 psi and the 80 psi measurement conditions. Compare values for C1 versus C2-C5.

**Table 4 - Fusion Time - Comparative Examples C1-C8 and Examples 1-6**

| Example | Viscosity Additive | Fusion Time (Minutes) |
|---|---|---|
| C1 | 20 DEHT | 19.30 |
| C2 | 20 DBT | 7.37 |
| C3 | 20 DOA | 21.53 |
| C4 | 20 TEG-EH | 19.70 |
| C5 | 20 MB10 | 8.50 |
| 1a | 17.5 DBT / 2.5 DOA | 6.97 |
| 1b | | 8.23 |
| 2a | 15 DBT/5 DOA | 7.87 |
| 2b | | 7.87 |
| 2c | | 8.53 |
| 2d | | 8.10 |
| 3a | 12.5 DBT / 7.5 DOA | 7.43 |
| 3b | | 8.40 |
| 3c | | 7.90 |
| 4 | 17.5 DBT / 2.5 TEG-EH | 7.27 |
| 5a | 15 DBT / 5 TEG-EH | 7.17 |
| 5b | | 7.70 |
| 6a | 12.5 DBT / 7.5 TEG-EH | 7.47 |
| 6b | | 7.93 |
| C6 | 17.5 DBT / 2.5 MB10 | 8.20 |
| C7a | 15 DBT / 5 MB10 | 7.23 |
| C7b | | 7.80 |
| C7c | | 7.70 |
| C8a | 12.5 DBT / 7.5 MB10 | 7.80 |
| C8b | | 8.07 |

As expected, the plasticizers advertised as being fast-fusing decreased the fusion time compared a plastisol made completely with EASTMAN 168 plasticizer (DEHT). The plasticizer made with only DEHT, comparative example C1, had a fusion time of 19.3 minutes while the plastisol made with DEHT and EASTMAN EFFUSION plasticizer (DBT), comparative example C2, fused in 7.4 minutes and the plastisol made with DEHT and JAYFLEX MB10 (MB10) fused in 8.5 minutes. In contrast, the plastisols made with DEHT and the viscosity-reducing plasticizers DOA and TEG-EH, comparative examples C3 and C4, had increased fusion times of 21.5 and 19.7 minutes, respectively.

Unexpectedly, the plastisols made with DEHT and blends of DBT/DOA had excellent fusion times across a set of compositions. The average fusion time for plastisols with ratios of 17.5 DBT/ 2.5 DOA (Ex 1), 15 DBT/ 5 DOA (Ex 2), 12.5 DBT/ 7.5 DOA (Ex 3) listed in Table 3 are 7.6, 8.1, and 7.9 minutes, respectively. Even when the 20 phr of non-DEHT plasticizer comprised 37.5 wt.% DOA (Ex 3), the fusion time was within one minute of the fusion time for a plastisol made with 20 phr DBT (C2, 7.4 minutes) as compared with the fusion time of a plastisol made with all DEHT (C1, 19.3 minutes) or DEHT and 20 phr DOA (C3, 21.5 minutes).

Unexpectedly, the plastisols made with DEHT and blends of DBT/TEG-EH had excellent fusion times across a wide set of compositions. The average fusion time for plastisols with ratios of 17.5 DBT/ 2.5 TEG-EH (Ex 4), 15 DBT/ 5 TEG-EH (Ex 5), 12.5 DBT/ 7.5 TEG-EH (Ex 6) listed in Table 3 are 7.3, 7.4, and 7.7 minutes, respectively. Even when the 20 phr of non-DEHT plasticizer comprised 37.5 wt.% TEG-EH (Ex 6), the fusion time was within one minute of the fusion time for a plastisol made with 20 phr DBT (C2, 7.4 minutes) as compared with the fusion time of a plastisol made with all DEHT (C1, 19.3 minutes) or DEHT and 20 phr TEG-EH (C4, 19.7 minutes).

The plastisols made with DEHT and blends of DBT/MB 10 had excellent fusion times across a wide set of compositions. The average fusion time for plastisols with ratios of 17.5 DBT/ 2.5 MB 10 (Comp Ex. C6), 15 DBT/ 5 MB 10 (Comp Ex C7), 12.5 DBT/ 7.5 MB 10 (Comp Ex C8) listed in Table 3 are 8.2, 7.6, and 7.9 minutes, respectively. These results are not unexpected because a plastisol made with DEHT and 20 phr DBT (C2) had a fusion time of 7.4 minutes and a plastisol made with DEHT and 20 phr MB 10 (C5) had a fusion time of 8.5 minutes.

### Example 7-

The general procedure for the preparation of PVC plastisols was followed using 100 phr Geon 121A PVC, 3 phr Epoxidized soybean oil, 3 phr AKROSTAB LT-4798, 24 phr EASTMAN 168 plasticizer (DEHT), and 15 phr EASTMAN EFFUSION plasticizer (DBT) and 2.5 phr EASTMAN DOA plasticizer (DOA). Brookfield viscosities, Severs viscosity, and fusion times were determined by the procedures noted above and the results are given in Table 5, 6, and 7, respectively. Brookfield and Severs viscosities were determined the day that the plastisols were produced (Initial), and on the first, seventh and twenty-eighth days after they were produced.

### Examples 8-9 and Comparative Examples C9-C11

Example 7 was repeated using 24 phr DEHT and 15 phr DBT and the amount of plasticizer(s) as given in Table 5. Brookfield viscosities, Severs viscosity, and fusion times were determined by the procedures noted above and the results are given in Table 5, 6, and 7, respectively. Brookfield and Severs viscosities were determined the day that the plastisols were produced (Initial), and on the first, seventh, and twenty-eighth day after they were produced.

**Table 5 - Plastisol Brookfield viscosity - Examples 7-9 and Comparative Examples**

| Example | plasticizer | Rpm | Initial | Day 1 | Day 7 | Day 28 |
|---|---|---|---|---|---|---|
| 7 | 15 DBT / 2.5 DOA | 2 | 42800 | 50500 | 65300 | 68300 |
| 8 | 15 DBT / 5 DOA | 2 | 29200 | 36100 | 43400 | 47800 |
| 9 | 15 DBT / 7.5 DOA | 2 | 16500 | 25400 | 30100 | 34300 |
| C9 | 15 DBT / 2.5 MB10 | 2 | 40200 | 54500 | 59000 | 80400 |
| C10 | 15 DBT / 5 MB10 | 2 | 26700 | 32500 | 43500 | 46900 |
| C11 | 15 DBT / 7.5 MB10 | 2 | 14900 | 19400 | 29000 | 28600 |
| 7 | 15 DBT / 2.5 DOA | 20 | 21800 | 28450 | 33150 | 37000 |
| 8 | 15 DBT / 5 DOA | 20 | 13500 | 15650 | 19250 | 21400 |
| 9 | 15 DBT / 7.5 DOA | 20 | 8700 | 11750 | 15700 | 14900 |
| C9 | 15 DBT / 2.5 MB10 | 20 | 20600 | 25500 | 32500 | 31800 |
| C10 | 15 DBT / 5 MB10 | 20 | 13450 | 17450 | 19300 | 22600 |
| C11 | 15 DBT / 7.5 MB10 | 20 | 8050 | 11250 | 12000 | 15000 |

**Table 6 - Severs viscosity - Examples 7-9 and Comparative Examples C9-C11**

| Example | plasticizer | Ps1 | Initial | Day 1 | Day 7 | Day 28 |
|---|---|---|---|---|---|---|
| 7 | 15 DBT / 2.5 DOA | 40 | 281060 | 309100 | 343545 | 406676 |
| 8 | 15 DBT / 5 DOA | 40 | 139564 | 153663 | 154492 | 167444 |
| 9 | 15 DBT / 7.5 DOA | 40 | 68336 | 75861 | 76651 | 90040 |
| C9 | 15 DBT / 2.5 MB10 | 40 | 303785 | 307894 | 356336 | 430062 |
| C10 | 15 DBT / 5 MB10 | 40 | 152225 | 156681 | 172223 | 185236 |
| C11 | 15 DBT / 7.5 MB10 | 40 | 74083 | 78639 | 83384 | 92866 |
| 7 | 15 DBT / 2.5 DOA | 80 | 482215 | 537299 | 594422 | 711189 |
| 8 | 15 DBT / 5 DOA | 80 | 244932 | 257325 | 262970 | 298585 |
| 9 | 15 DBT / 7.5 DOA | 80 | 116401 | 127868 | 132824 | 159000 |
| C9 | 15 DBT / 2.5 MB10 | 80 | 524449 | 529471 | 612780 | 777284 |
| C10 | 15 DBT / 5 MB10 | 80 | 255693 | 271343 | 288486 | 322279 |
| C11 | 15 DBT / 7.5 MB10 | 80 | 131823 | 137049 | 145932 | 166204 |

**Table 7 - Fusion Time -- Examples 7-9 and Comparative Examples C9-C11**

| Example | Plasticizer | Fusion Time (Minutes) |
|---|---|---|
| 7 | 15 DBT / 2.5 DOA | 7.33 |
| 8 | 15 DBT/5 DOA | 8.27 |
| 9 | 15 DBT / 7.5 DOA | 8.37 |
| C9 | 15 DBT / 2.5 MB10 | 7.10 |
| C10 | 15 DBT / 5 MB10 | 7.97 |
| C11 | 15 DBT / 7.5 MB10 | 8.10 |

The fusion times in Table 4, Comp Ex C5 and C3, show that formulations containing JAYFLEX MB10 (8.5 min) should be expected to fuse much faster than formulations containing DOA (21.5 minutes). Unexpectedly, the fusion times shown in Table 7 indicate that little to no sacrifice in fusion rates is necessary with blends of DOA with DBT over a range of formulations. The data in Tables 5-7 show that Examples 7-9, blends of DBT with DOA, can give a desirable balance of low and stable plastisol viscosity and good fusion rates. These results are equivalent or in some cases superior to those obtained with JAYFLEX MB10, Comparative Examples C9-C11.

### EVALUATION OF EMISSION

Emissions testing was conducted according to the German AgBB (Committee for Health-Related Evaluation of Building Products) methodology, February 2015 regulations. Fused sheet samples were prepared from plastisols containing 100 phr Geon 121A, 24 phr Eastman 168 Non-Phthalate Plasticizer, 15 phr Eastman Effusion, 3 phr epoxidized soybean oil, 3 phr Akcros LT 4798 stabilizer, and 5 phr additional plasticizer as described in Table 8

Emission analysis utilized Markes Microchambers in conjunction with automated thermal desorption gas chromatography and mass spectrometry for detection. Suitably sized discs were cut from the samples and placed in the Microchamber tests cells. The cells were maintained at 23°C and dried air was used to sweep the test cell at approximately 20.5 milliliters/minute. Emissions were collected after 3 and 28 days using Tenax TA thermal desorption tubes. Emissions data were evaluated using the AgBB methodology, calculated as indoor air concentrations in micrograms/cubic meter (µg/m³) using toluene equivalents. Total volatile organic compound (TVOC) and total semi-volatile organic compound (TSVOC) concentrations were determined as the sum of all components of concentration greater than or equal to 5 µg/m³. Compounds eluting between C6 (hexane) and C16 (hexadecane) are assigned as VOC, and compounds eluting between C16 and C22 (docosane) are assigned as SVOC. According to the AgBB protocol, TVOC emissions after 3 days must not exceed 10 mg/m³, and after 28 days must not exceed 1 mg/m³. TSVOC emissions after 28 days must not exceed 0.1 mg/m³.

**Table 8 - TVOC and TSVOC emissions for Examples 9-10 and Comp. Ex. C12-C14**

| Example | Plasticizer | TVOC 3 days (mg/m³) | TVOC 28 days (mg/m³) | TSVOC 28 Days (mg/m³) |
|---|---|---|---|---|
| 9 | DOA | 1.79 | 0.72 | < 0.01 |
| 10 | TEG-EH | 1.66 | 0.65 | < 0.01 |
| C12 | MB10 | 1.38 | 0.48 | 0.04 |
| C13 | 2,2,2 BEEEB* | 1.44 | 0.58 | < 0.01 |
| C14 | HB-40 | 1.95 | 0.67 | 0.04 |

| | | | | |
|---|---|---|---|---|
| * 2-(2-(2-butoxyethoxy)ethoxy)ethyl benzoate | | | | |

All samples passed the AgBB emissions testing. However, JAYFLEX MB10, (Comp Ex C12) contributed to SVOC emissions as did the mixture of hydrocarbons in the HB-40 Process Fluid (Comp Ex C14). Of the 0.04243 mg/m³ emissions in Comp Ex C12, 0.03541 mg/m³ were from the isodecyl benzoate itself. Contributions to SVOC emissions greater than 0.01 mg/m³ were not observed with DOA and TEG-EH, Examples 9-10, or with 2-(2-(2-butoxyethoxy)ethoxy)ethyl benzoate, Comp Ex C13. Species which contribute to SVOC emissions may cause articles such as flooring and wall covering to fail emissions testing should standards tighten, which has occurred in the past and may in the future as desires for improved indoor air quality have heightened.

## Claims

1. A plastisol comprising
polyvinyl chloride (PVC) and a plasticizer component;
wherein the plastisol comprises 30 to 100 parts plasticizer component per 100 parts PVC, and
wherein the plasticizer component comprises 40 wt.% to 70 wt.% di(2-ethylhexyl)terephthalate (DEHT), 10 wt.% to 50 wt.% dibutyl terephthalate (DBT), and 5 wt.% to 50 wt.% aliphatic plasticizer.

2. The plastisol of claim 1 wherein the plastisol comprises 30 to 80 parts plasticizer component; 30 to 70 parts plasticizer component; 30 to 60 parts plasticizer component; or 30 to 50 parts plasticizer component.

3. The plastisol of any one of claims 1-2, wherein the plasticizer component comprises 45 wt.% to 65 wt.% DEHT, 20 wt.% to 50 wt.% DBT, and 5 to 40 wt.% aliphatic plasticizer; or wherein the plasticizer component comprises 50 wt.% to 60 wt.% DEHT, 25 wt.% to 45 wt.% DBT, and 5 to 30 wt.% aliphatic plasticizer.

4. The plastisol of any one of claims 1-3, wherein the aliphatic plasticizer is a reaction product of one or more aliphatic alcohols and one or more aliphatic diacids,
wherein the one or more aliphatic alcohols are independently linear or branched C₄-C₁₃ alcohols, optionally containing one or more ether groups, and
wherein the one or more aliphatic diacids is selected from the group consisting of adipic, succinic, glutaric, azelaic, and sebacic acids;
or
wherein the one or more aliphatic alcohols is selected from the group consisting of n-butyl, isobutyl, 2-butyl, n-hexyl, isohexyl, butoxyethyl, n-heptyl, isoheptyl, n-octyl, isooctyl, 2-ethylhexyl, n-nonyl, isononyl, n-decyl, and isodecyl alcohols, and
wherein the one or more aliphatic diacids is selected from the group consisting of adipic, succinic, glutaric, azelaic, and sebacic acids;
or
wherein the one or more aliphatic alcohols is selected from the group consisting of n-butyl, isobutyl, 2-butyl, butoxyethyl, 2-ethylhexyl, n-octyl, isooctyl, n-decyl, and isodecyl alcohols, and
wherein the one or more aliphatic diacids are selected from the group consisting of adipic, succinic, and azelaic acids.

5. The plastisol of any one of claims 1-4, wherein the aliphatic plasticizer is selected from the group consisting of di-2-ethylhexyl adipate (DOA), dibutoxyethyl adipate, diisononyl adipate (DINA), heptyl nonyl adipate(C₇-C₉ adipate), and diisodecyl adipate (DIDA);
or wherein the aliphatic plasticizer is di-2-ethylhexyl adipate (DOA).

6. The plastisol of any one of claims 1-3, wherein the aliphatic plasticizer is a reaction product of one or more aliphatic diols and an aliphatic carboxylic acid,
wherein the one or more aliphatic diols is selected from the group consisting of ethylene glycol, diethylene glycol, triethylene glycol, tetraethylene glycol, or higher oligomers collectively termed polyethylene glycols, and
wherein the aliphatic carboxylic acid may be linear or branched C₄-C₁₀ carboxylic acid; or
wherein the one or more aliphatic diol is selected from the group consisting of ethylene glycol, diethylene glycol, triethylene glycol, tetraethylene glycol, or higher oligomers collectively termed polyethylene glycols, and
wherein the aliphatic carboxylic acid is selected from the group consisting of butanoic, hexanoic, 2-ethylbutanoic, octanoic, isooctanoic, 2-ethylhexanoic, nonanoic, and decanoic acids; or
wherein the one or more aliphatic diols is selected from the group consisting of triethylene glycol and tetraethylene glycol, and
wherein the aliphatic carboxylic acid is selected from the group consisting of 2-ethylbutanoic and 2-ethylhexanoic acids.

7. The plastisol of any one of claims 1-3 and 6, wherein the aliphatic plasticizer is selected from the group consisting of triethylene glycol di-2-ethylhexanoate (TEG-EH), triethylene glycol di-2-ethylbutyrate (TEG-EB), triethylene glycol dicaprylate, and polyethylene glycol di-2-ethylhexanoate (PEG-EH); or wherein the aliphatic plasticizer is triethylene glycol di-2-ethylhexanoate (TEG-EH).

8. The plastisol of any one of claims 1-7, wherein a ratio of a plastisol fusion time to a benchmark fusion time [fusion(plastisol):fusion(benchmark)] is less than 2.0 or less than 1.8, or less than 1.6, or less than 1.4, or less than 1.2, wherein the benchmark consists of the plastisol with the proviso that the aliphatic plasticizer is replaced by DBT, and wherein the plastisol fusion time and the benchmark fusion time are measured according to ASTM Method D2538.

9. A process for making the plastisol of any one of claims 1-8, wherein the process comprises contacting the polyvinyl chloride (PVC) and the plasticizer component.

10. An article comprising the plastisol of any one of claims 1-8.

11. The article of claim 10, wherein the article is selected from the group consisting of floor coverings, tiles, fabrics, wall coverings, mats, coatings, sealants, adhesives, sheets, toys, screens, window shades, films, upholstery, gloves, footwear, foam, inks, tool handles, and traffic cones; or wherein the article is selected from the group consisting of floor coverings, tiles, fabrics, wall coverings, mats, coatings.

## Patentansprüche

1. Plastisol, umfassend:
Polyvinylchlorid (PVC) und eine Weichmacherkomponente;
wobei das Plastisol 30 bis 100 Teile Weichmacherkomponente pro 100 Teile PVC umfasst und
wobei die Weichmacherkomponente 40 Gew.-% bis 70 Gew.-% Di(2-ethylhexyl)terephthalat (DEHT), 10 Gew.-% bis 50 Gew.-% Dibutylterephthalat (DBT) und 5 Gew.-% bis 50 Gew.-% aliphatischen Weichmacher umfasst.

2. Plastisol nach Anspruch 1, wobei das Plastisol 30 bis 80 Teile Weichmacherkomponente; 30 bis 70 Teile Weichmacherkomponente; 30 bis 60 Teile Weichmacherkomponente; oder 30 bis 50 Teile Weichmacherkomponente umfasst.

3. Plastisol nach einem der Ansprüche 1 bis 2, wobei die Weichmacherkomponente 45 Gew.-% bis 65 Gew.-% DEHT, 20 Gew.-% bis 50 Gew.-% DBT und 5 bis 40 Gew.-% aliphatischen Weichmacher umfasst; oder wobei die Weichmacherkomponente 50 Gew.-% bis 60 Gew.-% DEHT, 25 Gew.-% bis 45 Gew.-% DBT und 5 bis 30 Gew.-% aliphatischen Weichmacher umfasst.

4. Plastisol nach einem der Ansprüche 1 bis 3, wobei der aliphatische Weichmacher ein Reaktionsprodukt eines oder mehrerer aliphatischer Alkohole und einer oder mehrerer aliphatischer Disäuren ist;
wobei der eine oder die mehreren aliphatischen Alkohole unabhängig voneinander lineare oder verzweigte C₄-C₁₃-Alkohole sind, die gegebenenfalls eine oder mehrere Ethergruppen enthalten, und
wobei die eine oder die mehreren aliphatischen Disäuren ausgewählt sind aus der Gruppe bestehend aus Adipinsäure, Bernsteinsäure, Glutarsäure, Azelainsäure und Sebacinsäure;
oder
wobei der eine oder die mehreren aliphatischen Alkohole ausgewählt sind aus der Gruppe bestehend aus n-Butyl-, Isobutyl-, 2-Butyl-, n-Hexyl-, Isohexyl-, Butoxyethyl-, n-Heptyl-, Isoheptyl-, n-Octyl-, Isooctyl-, 2-Ethylhexyl-, n-Nonyl-, Isononyl-, n-Decyl- und Isodecyl-Alkoholen und
wobei die eine oder die mehreren aliphatischen Disäuren ausgewählt sind aus der Gruppe bestehend aus Adipinsäure, Bernsteinsäure, Glutarsäure, Azelainsäure und Sebacinsäure;
oder
wobei der eine oder die mehreren aliphatischen Alkohole ausgewählt sind aus der Gruppe bestehend aus n-Butyl-, Isobutyl-, 2-Butyl-, Butoxyethyl-, 2-Ethylhexyl-, n-Octyl-, Isooctyl-, n-Decyl- und Isodecyl-Alkoholen und
wobei die eine oder die mehreren aliphatischen Disäuren ausgewählt sind aus der Gruppe bestehend aus Adipinsäure, Bernsteinsäure und Azelainsäure.

5. Plastisol nach einem der Ansprüche 1 bis 4, wobei der aliphatische Weichmacher ausgewählt ist aus der Gruppe bestehend aus Di-2-ethylhexyladipat (DOA), Dibutoxyethyladipat, Diisononyladipat (DINA), Heptylnonyladipat (C₇-C₉-Adipat) und Diisodecyladipat (DIDA);
oder wobei der aliphatische Weichmacher Di-2-ethylhexyladipat (DOA) ist.

6. Plastisol nach einem der Ansprüche 1 bis 3, wobei der aliphatische Weichmacher ein Reaktionsprodukt eines oder mehrerer aliphatischer Diole und einer aliphatischen Carbonsäure ist;
wobei das eine oder die mehreren aliphatischen Diole ausgewählt sind aus der Gruppe bestehend aus Ethylenglykol, Diethylenglykol, Triethylenglykol, Tetraethylenglykol oder höheren Oligomeren, die gemeinsam als Polyethylenglykole bezeichnet werden, und
wobei die aliphatische Carbonsäure eine lineare oder verzweigte C₄-C₁₀-Carbonsäure sein kann; oder
wobei das eine oder die mehreren aliphatischen Diole ausgewählt sind aus der Gruppe bestehend aus Ethylenglykol, Diethylenglykol, Triethylenglykol, Tetraethylenglykol oder höheren Oligomeren, die gemeinsam als Polyethylenglykole bezeichnet werden, und
wobei die aliphatische Carbonsäure ausgewählt ist aus der Gruppe bestehend aus Butansäure, Hexansäure, 2-Ethylbutansäure, Octansäure, Isooctansäure, 2-Ethylhexansäure, Nonansäure und Decansäure; oder
wobei das eine oder die mehreren aliphatischen Diole ausgewählt sind aus der Gruppe bestehend aus Triethylenglykol und Tetraethylenglykol und
wobei die aliphatische Carbonsäure ausgewählt ist aus der Gruppe bestehend aus 2-Ethylbutansäure und 2-Ethylhexansäure.

7. Plastisol nach einem der Ansprüche 1 bis 3 und 6, wobei der aliphatische Weichmacher ausgewählt ist aus der Gruppe bestehend aus Triethylenglykol-di-2-ethylhexanoat (TEG-EH), Triethylenglykol-di-2-ethylbutyrat (TEG-EB), Triethylenglykoldicaprylat und Polyethylenglykol-di-2-ethylhexanoat (PEG-EH); oder wobei der aliphatische Weichmacher Triethylenglykol-di-2-ethylhexanoat (TEG-EH) ist.

8. Plastisol nach einem der Ansprüche 1 bis 7, wobei ein Verhältnis einer Plastisol-Schmelzzeit (plastisol fusion time) zu einer Benchmark-Schmelzzeit (benchmark fusion time) [Schmelze(Plastisol) : Schmelze(Benchmark)] weniger als 2,0 oder weniger als 1,8 oder weniger als 1,6 oder weniger als 1,4 oder weniger als 1,2 beträgt, wobei der Benchmark aus dem Plastisol mit der Maßgabe besteht, dass der aliphatische Weichmacher durch DBT ersetzt wird, und wobei die Plastisol-Schmelzzeit und die Benchmark-Schmelzzeit gemäß dem ASTM-Verfahren D2538 gemessen werden.

9. Verfahren zur Herstellung des Plastisols nach einem der Ansprüche 1 bis 8, wobei das Verfahren das Inkontaktbringen des Polyvinylchlorids (PVC) und der Weichmacherkomponente umfasst.

10. Artikel, umfassend das Plastisol nach einem der Ansprüche 1 bis 8.

11. Artikel nach Anspruch 10, wobei der Artikel ausgewählt ist aus der Gruppe bestehend aus Bodenbelägen, Fliesen, Stoffen, Wandbelägen, Matten, Beschichtungen, Dichtungsmassen, Klebstoffen, Folien, Spielzeugen, Bildschirmen, Fensterschirmen, Folien, Polstern, Handschuhen, Schuhen, Schaum, Tinten, Werkzeuggriffen und Verkehrskegeln; oder wobei der Artikel ausgewählt ist aus der Gruppe bestehend aus Bodenbelägen, Fliesen, Stoffen, Wandbelägen, Matten, Beschichtungen.

## Revendications

1. Plastisol comprenant
du poly(chlorure de vinyle) (PVC) et un composant plastifiant ;
dans lequel le plastisol comprend 30 à 100 parties de composant plastifiant pour 100 parties de PVC, et
dans lequel le composant plastifiant comprend 40 % en poids à 70 % en poids de téréphtalate de di(2-éthylhexyle) (DEHT), 10 % en poids à 50 % en poids de téréphtalate de dibutyle (DBT), et 5 % en poids à 50 % en poids de plastifiant aliphatique.

2. Plastisol selon la revendication 1, dans lequel le plastisol comprend 30 à 80 parties de composant plastifiant ; 30 à 70 parties de composant plastifiant ; 30 à 60 parties de composant plastifiant ; ou 30 à 50 parties de composant plastifiant.

3. Plastisol selon l'une quelconque des revendications 1 et 2, dans lequel le composant plastifiant comprend 45 % en poids à 65 % en poids de DEHT, 20 % en poids à 50 % en poids de DBT, et 5 à 40 % en poids de plastifiant aliphatique ; ou dans lequel le composant plastifiant comprend 50 % en poids à 60 % en poids de DEHT, 25 % en poids à 45 % en poids de DBT, et 5 à 30 % en poids de plastifiant aliphatique.

4. Plastisol selon l'une quelconque des revendications 1 à 3, dans lequel le plastifiant aliphatique est un produit de réaction d'un ou plusieurs alcools aliphatiques et d'un ou plusieurs diacides aliphatiques,
dans lequel les un ou plusieurs alcools aliphatiques sont indépendamment des alcools en C₄ à C₁₃ linéaires ou ramifiés, contenant éventuellement un ou plusieurs groupes éthers, et
dans lequel les un ou plusieurs diacides aliphatiques sont choisis dans l'ensemble constitué par les acides adipique, succinique, glutarique, azélaïque, et sébacique ; ou
dans lequel les un ou plusieurs alcools aliphatiques sont choisis dans l'ensemble constitué par les alcools n-butylique, isobutylique, 2-butylique, n-hexylique, isohexylique, butoxyéthylique, n-heptylique, isoheptylique, n-octylique, isooctylique, 2-éthylhexylique, n-nonylique, isononylique, n-décylique, et isodécylique, et
dans lequel les un ou plusieurs diacides aliphatiques sont choisis dans l'ensemble constitué par les acides adipique, succinique, glutarique, azélaïque, et sébacique ; ou
dans lequel les un ou plusieurs alcools aliphatiques sont choisis dans l'ensemble constitué par les alcools n-butylique, isobutylique, 2-butylique, butoxyéthylique, 2-éthylhexylique, n-octylique, isooctylique, n-décylique, et isodécylique, et
dans lequel les un ou plusieurs diacides aliphatiques sont choisis dans l'ensemble constitué par les acides adipique, succinique, et azélaïque.

5. Plastisol selon l'une quelconque des revendications 1 à 4, dans lequel le plastifiant aliphatique est choisi dans l'ensemble constitué par l'adipate de di(2-éthylhexyle) (DOA), l'adipate de dibutoxyéthyle, l'adipate de diisononyle (DINA), l'adipate d'heptylnonyle (adipate en C₇ à C₉), et l'adipate de diisodécyle (DIDA) ; ou
dans lequel le plastifiant aliphatique est l'adipate de di(2-éthylhexyle) (DOA).

6. Plastisol selon l'une quelconque des revendications 1 à 3, dans lequel le plastifiant aliphatique est un produit de réaction d'un ou plusieurs diols aliphatiques et d'un acide carboxylique aliphatique,
dans lequel les un ou plusieurs diols aliphatiques sont choisis dans l'ensemble constitué par l'éthylèneglycol, le diéthylèneglycol, le triéthylèneglycol, le tétraéthylèneglycol, et les oligomères supérieurs collectivement appelés polyéthylène-glycols, et
dans lequel l'acide carboxylique aliphatique peut être un acide carboxylique en C₄ à C₁₀ linéaire ou ramifié ; ou
dans lequel les un ou plusieurs diols aliphatiques sont choisis dans l'ensemble constitué par l'éthylèneglycol, le diéthylèneglycol, le triéthylèneglycol, le tétraéthylèneglycol, et les oligomères supérieurs collectivement appelés polyéthylène-glycols, et
dans lequel l'acide carboxylique aliphatique est choisi dans l'ensemble constitué par les acides butanoïque, hexanoïque, 2-éthylbutanoïque, octanoïque, isooctanoïque, 2-éthylhexanoïque, nonanoïque, et décanoïque ; ou
dans lequel les un ou plusieurs diols aliphatiques sont choisis dans l'ensemble constitué par le triéthylèneglycol et le tétraéthylèneglycol, et
dans lequel l'acide carboxylique aliphatique est choisi dans l'ensemble constitué par les acides 2-éthylbutanoïque et 2-éthylhexanoïque.

7. Plastisol selon l'une quelconque des revendications 1 à 3 et 6, dans lequel le plastifiant aliphatique est choisi dans l'ensemble constitué par le di(2-éthylhexanoate) de triéthylèneglycol (TEG-EH), le di(2-éthylbutyrate) de triéthylèneglycol (TEG-EB), le dicaprylate de triéthylèneglycol, et le di(2-éthylhexanoate) de polyéthylèneglycol (PEG-EH) ; ou
dans lequel le plastifiant aliphatique est le di(2-éthylhexanoate) de triéthylèneglycol (TEG-EH).

8. Plastisol selon l'une quelconque des revendications 1 à 7, dans lequel un rapport du temps de fusion du plastisol à un temps de fusion d'un étalon [fusion (plastisol) / fusion (étalon)] est inférieur à 2,0 ou inférieur à 1,8, ou inférieur à 1,6, ou inférieur à 1,4, ou inférieur à 1,2, dans lequel l'étalon consiste en le plastisol sous réserve que le plastifiant aliphatique est remplacé par du DBT, et dans lequel le temps de fusion du plastisol et le temps de fusion de l'étalon sont mesurés conformément à la méthode ASTM D2538.

9. Procédé pour produire le plastisol de l'une quelconque des revendications 1 à 8, dans lequel le procédé comprend la mise en contact du poly(chlorure de vinyle) (PVC) et du composant plastifiant.

10. Article comprenant le plastisol de l'une quelconque des revendications 1 à 8.

11. Article selon la revendication 10, dans lequel l'article est choisi dans l'ensemble constitué par les revêtements de sol, les tuiles, les étoffes, les revêtements muraux, les mats, les revêtements, les agents de colmatage, les adhésifs, les feuilles, les jouets, les écrans, les obturateurs de fenêtre, les films, les rembourrages, les gants, les articles chaussants, les mousses, les encres, les manches d'outil, et les cônes de signalisation ; ou dans lequel l'article est choisi dans l'ensemble constitué par les revêtements de sol, les tuiles, les étoffes, les revêtements muraux, les mats, les revêtements.
